# EUROPEAN PATENT APPLICATION

(11) **EP 4 501 996 A1**
(43) Date of publication of application: **05.02.2025**
(21) Application number: 23779704.8
(22) Date of filing: 16.03.2023
(51) Int. Cl.: C08F 293/00, C08L 53/00, C09D 153/00, C09K 3/00, D06M 15/19, G02B 1/18

(54) **ABA TRIBLOCK POLYMER, COMPOSITION, SURFACE TREATMENT AGENT, ARTICLE, AND METHOD FOR PRODUCING ARTICLE**

(30) Priority: 30.03.2022 JP 2022057656
(71) Applicant: AGC INC., Chiyoda-ku, Tokyo 1008405 (JP)
(72) Inventor: KOGUCHI, Ryohei, Tokyo 100-8405 (JP); HARA, Hiroyuki, Tokyo 100-8405 (JP)
(74) Representative: Müller-Boré & Partner Patentanwälte PartG mbB
(86) International application number: PCT/JP2023/010467
(87) International publication number: WO 2023/189686

(57) **Abstract**

An ABA triblock polymer including an A block and a B block, in which the A block is a random polymer including a constituent unit derived from a reactive group-containing polymerizable monomer and a constituent unit derived from a hydrophobic group-containing polymerizable monomer, and the B block contains a divalent organopolysiloxane residue in a main chain, as well as applications thereof.

## Description

### Technical Field

The present disclosure relates to an ABA triblock polymer, a composition, a surface treatment agent, an article, and a method of producing an article.

### Background Art

In recent years, techniques for hardly putting fingerprints on article surfaces or techniques for easily eliminating fouling have been demanded in order to enhance performances such as appearance and viewability. Specific known methods are methods involving surface treatment of article surfaces with surface treatment agents.

For example, Patent Literature 1 describes a curable composition obtained by blending a specified organosilicon compound and/or a partial hydrolysis condensate thereof, water in an amount equal to or more than the amount enabling 100% in the theory of such compound and/or partial condensate to be hydrolyzed and condensed, a vinyl group-containing alkoxysilane, a vinyl group-containing polysiloxane, a methacrylic acid ester and/or an acrylic acid ester each having a hydroxyl group, and a silicone-modified acrylic copolymer obtained by copolymerizing a methacrylic acid ester and/or an acrylic acid ester. Patent Literature 2 describes a surfactant containing a block copolymer having a segment constituted from a molecular chain containing a unit derived from a monomer having a perfluoroalkyl group having 1 to 6 carbon atoms and a segment constituted from other molecular chain. Patent Literature 3 describes a water repellent including a silicon-containing polymer containing a repeating unit derived from a (meth)acrylate having a linear or branched hydrocarbon group having from 8 to 30 carbon atoms, and a repeating unit derived from a silicone macromer having a radical polymerizable group, as essential components.

### Citation List

### Patent Literature

Patent Literature 1: Japanese Patent Application Laid-Open (JP-A) No. H9-111185
Patent Literature 2: JP-A 2007-186671
Patent Literature 3: JP-A 2018-95879

### SUMMARY OF INVENTION

### Technical Problem

A composition used for surface treatment agents or the like is demanded to be further improved from the viewpoint of antifouling properties.

The disclosure has been made in view of such circumstances, and an object to be achieved by one embodiment of the present invention is to provide an ABA triblock polymer and a composition that are each useful as a surface treatment agent capable of forming a surface treatment layer excellent in antifouling properties on a substrate.

An object to be achieved by one embodiment of the invention is to provide a surface treatment agent capable of forming a surface treatment layer excellent in antifouling properties on a substrate.

An object to be achieved by one embodiment of the invention is to provide an article including a surface treatment layer excellent in antifouling properties and a method of producing an article.

### Solution to Problem

The disclosure includes the following aspects.
<1> An ABA triblock polymer including an A block and a B block, wherein
   the A block is a random polymer including a constituent unit derived from a reactive group-containing polymerizable monomer and a constituent unit derived from a hydrophobic group-containing polymerizable monomer, and
   the B block contains a divalent organopolysiloxane residue in a main chain.
<2> The ABA triblock polymer according to <1>, wherein the hydrophobic group is at least one group selected from the group consisting of a linear alkyl group having from 12 to 30 carbon atoms and a divalent organopolysiloxane residue.
<3> The ABA triblock polymer according to <1> or <2>, wherein the reactive group is at least one selected from a reactive silyl group, an isocyanato group, a phosphoric acid ester group, a carboxy group, a carbodiimide group, an oxazoline group, and an epoxy group.
<4> The ABA triblock polymer according to any one of <1> to <3>, wherein the reactive group is a reactive silyl group.
<5> The ABA triblock polymer according to any one of <1> to <4>, wherein the B block has a structure represented by the following Formula (B1): 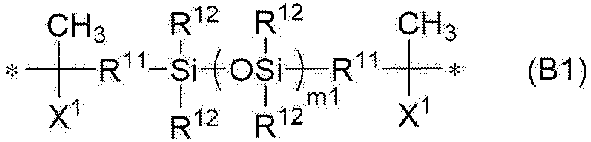 **In** Formula (B1), each R¹¹ independently represents a divalent linking group, each R¹² independently represents a hydrocarbon group, each X¹ independently represents an electron withdrawing group, m is an integer of 1 or more, and * means a linking site with the A block.
<6> The ABA triblock polymer according to any one of <1> to <5>, wherein the mass ratio of the content of the A block with respect to the content of the B block is from 0.4 to 9.
<7> The ABA triblock polymer according to any one of <1> to <6>, wherein the mass ratio of the content of the constituent unit derived from a hydrophobic group-containing polymerizable monomer with respect to the content of the constituent unit derived from a reactive group-containing polymerizable monomer in the A block is from 5 to 20.
<8> A composition including the ABA triblock polymer according to any one of <1> to <7>, and a liquid medium.
<9> A surface treatment agent including the ABA triblock polymer according to any one of <1> to <7>.
<10> The surface treatment agent according to <9>, further including a liquid medium.
<11> A method of producing an article, including performing surface treatment of a substrate with the surface treatment agent according to <9> or <10>, to produce an article in which a surface treatment layer is formed on the substrate.
<12> An article including a substrate, and a surface treatment layer disposed on the substrate and surface-treated with the surface treatment agent according to <9> or <10>.
<13> The article according to <12>, wherein the article is an optical member.
<14> The article according to <12>, wherein the article is a display or a touch panel.
<15> The article according to <12>, wherein the substrate is a fabric cloth or a non-woven fabric.

### Advantageous Effects of Invention

One embodiment of the invention provides an ABA triblock polymer and a composition that are each useful as a surface treatment agent capable of forming a surface treatment layer excellent in antifouling properties on a substrate.

One embodiment of the invention provides a surface treatment agent capable of forming a surface treatment layer excellent in antifouling properties on a substrate.

One embodiment of the invention provides an article including a surface treatment layer excellent in antifouling properties and a method of producing an article.

### DESCRIPTION OF EMBODIMENTS

A numerical value range expressed with "to" in the disclosure includes numerical values described before and after "to" respectively as the minimum value and the maximum value.

The upper limit value or the lower limit value described with respect to one numerical value range among numerical value ranges described stepwise in the disclosure may be replaced with the upper limit value or the lower limit value described with respect to any other numerical value range described stepwise. The upper limit value or the lower limit value described with respect to any numerical value range described herein may be replaced with values shown in Examples.

The "surface treatment layer" in the disclosure means a layer formed on a surface of a substrate by surface treatment.

The "polymerizable monomer" in the disclosure means a monomer having a polymerizable group.

The "(meth)acrylate" in the disclosure conceptually encompasses both acrylate and methacrylate. The "(meth)acrylic" conceptually encompasses both acrylic and methacrylic.

### [ABA Triblock Polymer]

The ABA triblock polymer of the disclosure is an ABA triblock polymer including an A block and a B block, in which the A block is a random polymer including a constituent unit derived from a reactive group-containing polymerizable monomer and a constituent unit derived from a hydrophobic group-containing polymerizable monomer, and the B block contains a divalent organopolysiloxane residue in a main chain.

In a case in which the ABA triblock polymer of the disclosure is used as a surface treatment agent, a surface treatment layer excellent in antifouling properties can be formed. The reason for this is not clear, but is presumed as follows.

The A block in the ABA triblock polymer of the disclosure includes a constituent unit derived from a hydrophobic group-containing polymerizable monomer, and thus is a block whose side chain is hydrophobic. The divalent organopolysiloxane residue contained in a main chain of the B block is also hydrophobic. The entire polymer is hydrophobic and achieves both a hydrophobic function of the side chain and a hydrophobic function of the main chain, and is considered to allow a surface treatment layer excellent in antifouling properties to be obtained. The A block contains a constituent unit derived from a reactive group-containing polymerizable monomer and therefore it is considered that the reactive group reacts with a substrate surface to contribute to an enhancement in adhesiveness with a substrate.

The polymers described in Patent Literature 1 and Patent Literature 3 are each a random polymer, and no description about any ABA triblock polymer is made. The polymer described in Patent Literature 2 is a block polymer, but does not include any constituent unit derived from a reactive group-containing polymerizable monomer. Patent Literature 2 does not focus on antifouling properties.

Hereinafter, the ABA triblock polymer of the disclosure (hereinafter, also simply referred to as "block polymer") is described in detail.

The block polymer of the disclosure is an ABA triblock polymer including an A block and a B block. In the block polymer of the disclosure, the A block is bound to each of both ends of the B block. In other words, the A block and the B block are linked in the order of A block-B block-A block in the block polymer of the disclosure.

### <A Block>

The A block is a random polymer including a constituent unit derived from a reactive group-containing polymerizable monomer and a constituent unit derived from a hydrophobic group-containing polymerizable monomer.

### (Constituent Unit Derived from Reactive Group-Containing Polymerizable Monomer)

The A block may contain only one, or two or more constituent units each derived from a reactive group-containing polymerizable monomer. The number of reactive groups in such a constituent unit derived from a reactive group-containing polymerizable monomer may be only one, or two or more.

The polymerizable group contained in the reactive group-containing polymerizable monomer may be a cationically polymerizable group or may be a radical polymerizable group. The polymerizable group is preferably a radical polymerizable group in terms of excellent curability. The radical polymerizable group is preferably an ethylenically unsaturated group, more preferably a (meth) acryloyl group, in terms of excellent curability.

The reactive group in the constituent unit derived from a reactive group-containing polymerizable monomer is preferably a functional group capable of being covalently bound with a hydroxyl group from the viewpoint of excellent adhesiveness between a substrate and a surface treatment layer.

In particular, the reactive group is more preferably at least one selected from a reactive silyl group, an isocyanato group, a phosphoric acid ester group, a carboxy group, a carbodiimide group, an oxazoline group, and an epoxy group, still more preferably a reactive silyl group from the viewpoint of formation of a surface treatment layer excellent in antifouling properties.

The reactive silyl group means a group in which the reactive group is bound to a silicon atom (Si atom). The reactive group is preferably a hydrolyzable group or a hydroxyl group.

The hydrolyzable group is a group to be formed into a hydroxyl group by hydrolysis reaction. In other words, a hydrolyzable silyl group represented by Si-L is formed into a silanol group represented by Si-OH, by hydrolysis reaction. Such a silanol group further reacts with each other to form a Si-O-Si bond. Such a silanol group can also form a Si-O-Si bond by dehydration-condensation reaction with a silanol group derived from an oxide present on a substrate surface. Examples of the hydrolyzable group include an alkoxy group, an aryloxy group, a halogen atom, an acyl group, an acyloxy group, and an isocyanato group (-NCO). The alkoxy group is preferably an alkoxy group having from 1 to 4 carbon atoms. Herein, the aryl group of the aryloxy group encompasses a heteroaryl group. The halogen atom is preferably a chlorine atom. The acyl group is preferably an acyl group having from 1 to 6 carbon atoms. The acyloxy group is preferably an acyloxy group having from 1 to 6 carbon atoms.

The reactive silyl group is preferably an alkoxysilyl group from the viewpoints of ease of production of a uniform film and excellent durability. In particular, the alkoxysilyl group is preferably a dialkoxysilyl group or a trialkoxysilyl group, more preferably a trialkoxysilyl group.

The reactive silyl group is preferably a group represented by the following Formula A.

-Si(R¹)ₙL₃₋ₙ ... (A)

Each R¹ independently represents a hydrocarbon group, each L independently represents a hydrolyzable group or a hydroxyl group, and n is an integer of from 0 to 2.

In a case in which a plurality of such reactive silyl groups is present in one molecule, such reactive silyl groups may be the same as or different from each other. Such reactive silyl groups are preferably the same as each other from the viewpoints of availability of a raw material and ease of production of a compound.

Each R¹ independently represents a hydrocarbon group, preferably a saturated hydrocarbon group. The number of carbon atoms in R¹ is preferably from 1 to 6, more preferably from 1 to 3, still more preferably from 1 to 2.

The hydrolyzable group is preferably the one described above.

In particular, L preferably an alkoxy group having from 1 to 4 carbon atoms, or a halogen atom from the viewpoint of ease of production of a compound. L preferably represents an alkoxy group having from 1 to 4 carbon atoms, more preferably an ethoxy group or a methoxy group in that less outgas occurs during coating, and the storage stability of a compound is more excellent.

n is an integer of from 0 to 2, preferably 0 or 1, more preferably 0. The presence of a plurality of Ls results in stronger adhesiveness of a surface treatment layer with a substrate.

In a case in which n is 1 or less, such plural Ls present in one molecule may be the same as or different from each other. Such Ls are preferably the same as each other from the viewpoints of availability of a raw material and ease of production of a compound. In a case in which n is 2, plural R¹s present in one molecule may be the same as or different from each other. Such R¹s are preferably the same as each other from the viewpoints of availability of a raw material and ease of production of a compound.

Examples of a polymerizable monomer having the reactive silyl group include vinyltrimethoxysilane, vinyltriethoxysilane, p-styryltrimethoxysilane, 2-methacryloxyethyltrimethoxysilane, 2-methacryloxyethyltriethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 4-methacryloxybutyltrimethoxysilane, 4-methacryloxybutyltriethoxysilane, 2-acryloxyethyltrimethoxysilane, 2-acryloxyethyltriethoxysilane, 3-acryloxypropyltrimethoxysilane, 3-acryloxypropyltriethoxysilane, 4-acryloxybutyltrimethoxysilane, and 4-acryloxybutyltriethoxysilane.

In particular, the polymerizable monomer having the reactive silyl group is preferably 3-methacryloxypropylmethyldimethoxysilane, 3-methacryloxypropyltrimethoxysilane, 3-methacryloxypropylmethyldiethoxysilane, 3-methacryloxypropyltriethoxysilane, or 3-acryloxypropyltrimethoxysilane, more preferably 3-methacryloxypropyltrimethoxysilane, from the viewpoint of excellent curability.

Examples of a polymerizable monomer having an isocyanato group include 2-isocyanatoethyl (meth)acrylate, 3-isocyanatopropyl (meth)acrylate, 4-isocyanatobutyl (meth)acrylate, and 2-(2-methacryloyloxyethyloxy)ethyl isocyanate.

The polymerizable monomer having an isocyanato group may be blocked with a blocking agent. Examples of the blocking agent include pyrazoles such as 3,5-dimethylpyrazole; oximes such as 2-butanone oxime; and lactams such as ε-caprolactam.

Examples of a polymerizable monomer having a phosphoric acid ester group include 2-(meth)acryoyloxyethyl acid phosphate.

Examples of a polymerizable monomer having a carboxy group include (meth)acrylic acid, itaconic acid, 2-(meth)acryloyloxyethyl succinic acid, and 2-(meth)acryloyloxyhexahydrophthalic acid.

The polymerizable monomer having a carboxy group may be an anhydride. Examples of the anhydride include (meth)acrylic acid anhydride and itaconic acid anhydride.

Examples of a polymerizable monomer having a carbodiimide group include 1-ethyl-3-propyl(meth)acryoylcarbodiimide.

Examples of a polymerizable monomer having an oxazoline group include 2-vinyloxazoline.

Examples of a polymerizable monomer having an epoxy group include glycidyl (meth)acrylate.

The content of the constituent unit derived from a reactive group-containing polymerizable monomer is preferably from 1 to 20% by mass, more preferably from 3 to 15% by mass with respect to the total amount of the A block.

### (Constituent Unit Derived from Hydrophobic Group-Containing Polymerizable Monomer)

The A block may contain only one, or two or more constituent units each derived from a hydrophobic group-containing polymerizable monomer.

The hydrophobic group-containing polymerizable monomer may contain only one, or two or more polymerizable groups.

The polymerizable group contained in the hydrophobic group-containing polymerizable monomer may be a cationically polymerizable group or may be a radical polymerizable group. The polymerizable group is preferably a radical polymerizable group in terms of excellent curability. The radical polymerizable group is preferably an ethylenically unsaturated group, more preferably a (meth) acryloyl group, in terms of excellent curability.

The hydrophobic group in the disclosure means a group not capable of forming a hydrogen bond with water.

The hydrophobic group-containing polymerizable monomer may contain only one, or two or more hydrophobic groups.

Examples of the hydrophobic group in the constituent unit derived from a hydrophobic group-containing polymerizable monomer include at least one selected from the group consisting of a hydrocarbon group and an organopolysiloxane residue.

The hydrocarbon group may be a monovalent hydrocarbon group or may be a divalent hydrocarbon group.

The monovalent hydrocarbon group may be an aliphatic hydrocarbon group (alkyl group), an alicyclic hydrocarbon group, an aromatic hydrocarbon group, or any combination thereof. The alkyl group may be a linear alkyl group or may be a branched alkyl group.

Examples of the alkyl group a methyl group, an ethyl group, a n-propyl group, an isopropyl group, a n-butyl group, an isobutyl group, a tert-butyl group, a pentyl group, a hexyl group, a heptyl group, a 2-ethylhexyl group, an octyl group, a decyl group, a lauryl group, tetradecyl group, a hexadecyl group, a stearyl group, an eicosyl group, and a behenyl group.

Examples of the alicyclic hydrocarbon group include a cyclopentyl group, a cyclohexyl group, a cycloheptyl group, a cyclooctyl group, a decahydronaphthyl group, an adamantyl group, and a norbornyl group.

Examples of the aromatic hydrocarbon group include a phenyl group, a naphthyl group, an anthryl group, a biphenyl group, and a phenanthryl group.

Examples of a combination of the alkyl group and the aromatic hydrocarbon group include a p-methylphenyl group, a p-tert-butylphenyl group, a p-adamantylphenyl group, a tolyl group, a xylyl group, a cumenyl group, a mesityl group, a 2,6-diethylphenyl group, and a 2-methyl-6-ethylphenyl group, a benzyl group, a phenethyl group, a phenylpropyl group, a trityl group, a naphthylmethyl group, and a naphthylethyl group.

Examples of a combination of the alkyl group and the alicyclic hydrocarbon group include a methylcyclohexyl group, a dimethylcyclohexyl group, a methylnorbornyl group, and an isobornyl group.

The divalent hydrocarbon group may be a divalent aliphatic hydrocarbon group (alkylene group), may be a divalent alicyclic hydrocarbon group, may be a divalent aromatic hydrocarbon group, or may be any combination thereof. The alkylene group may be a linear alkylene group, or may be a branched alkylene group.

Examples of the divalent hydrocarbon group include a group obtained by removing one hydrogen atom from the monovalent hydrocarbon group.

Examples of the organopolysiloxane residue include any group represented by the following Formulae P1 to P3. Formulae P1 to P3 may be each included singly, or in combination of two or more kinds thereof.

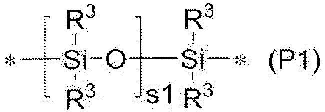

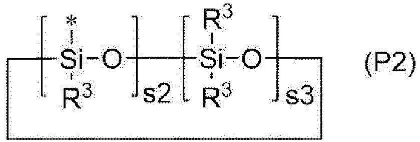

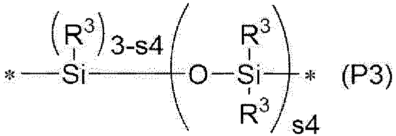

In Formulae P1 to P3, each R³ independently represents a hydrocarbon group.

In Formula P1, s1 is an integer of 1 or more.

In Formula P2, each of s2 and s3 independently represents an integer of 1 or more.

In Formula P3, s4 is an integer of from 1 to 3.

Examples of the organopolysiloxane residue include groups shown below. Each R^{a} independently represents a hydrocarbon group. * represents a linking site.

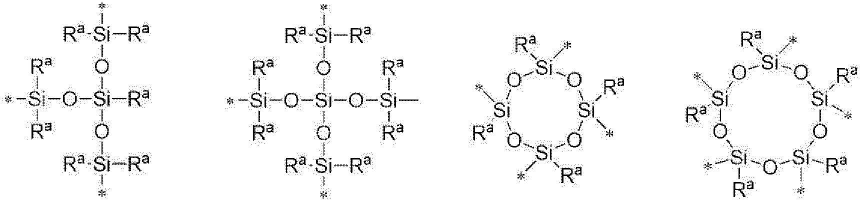

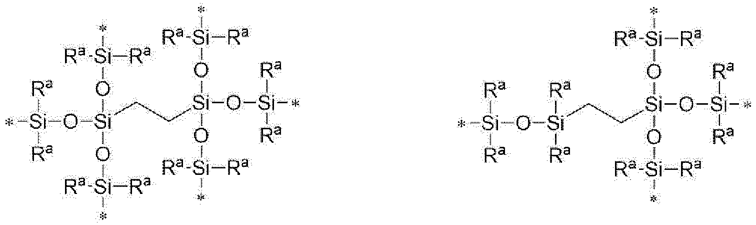

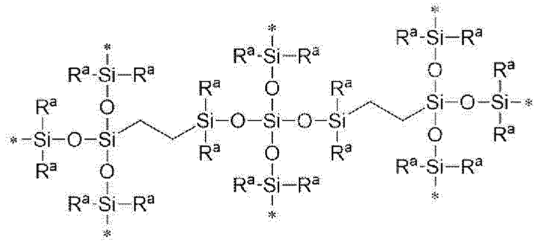

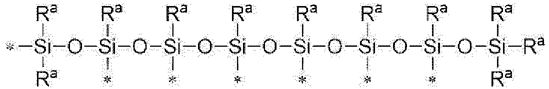

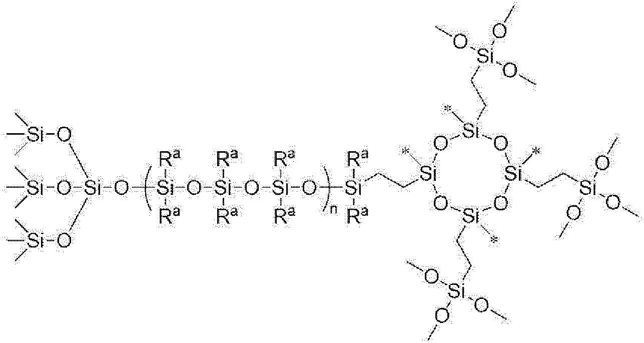

Examples of the hydrocarbon group represented by R³ or R^{a} include an aliphatic hydrocarbon group and an aromatic hydrocarbon group. In particular, the hydrocarbon group is preferably an aliphatic hydrocarbon group, more preferably an alkyl group. The alkyl group may be any of a linear alkyl group, a branched alkyl group, and a cyclic alkyl group, and is preferably a linear alkyl group, more preferably a methyl group, an ethyl group, a n-propyl group, or a n-butyl group, still more preferably a methyl group.
s1 is an integer of 1 or more, preferably from 5 to 250, more preferably from 10 to 200.
s2 is an integer of 1 or more, preferably from 2 to 5, more preferably from 2 to 3.
s3 is an integer of 1 or more, preferably from 5 to 250, more preferably from 10 to 200.
s4 is an integer of from 1 to 3, preferably from 1 to 2.

Examples of the hydrophobic group-containing polymerizable monomer include (meth)acrylate compounds such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, cyclohexyl (meth)acrylate, 2-ethylhexyl (meth)acrylate, benzyl (meth)acrylate, octyl (meth)acrylate, decyl (meth)acrylate, isobornyl (meth)acrylate, dicyclopentanyl (meth)acrylate, dicyclopentenyl (meth)acrylate, dodecyl (meth)acrylate [another name: lauryl (meth)acrylate], tetradecyl (meth)acrylate [another name: myristyl (meth)acrylate], hexadecyl (meth)acrylate, octadecyl (meth)acrylate [another name: stearyl (meth)acrylate], eicosyl (meth)acrylate, and docosyl (meth)acrylate [another name: behenyl (meth)acrylate];
vinyl ether compounds such as methyl vinyl ether, ethyl vinyl ether, n-propyl vinyl ether, isopropyl vinyl ether, pentyl vinyl ether, 2-ethylhexyl vinyl ether, octadecyl vinyl ether, and cyclohexyl vinyl ether;
vinyl compounds such as vinyl pivalate, vinyl propionate, vinyl butyrate, vinyl caproate, vinyl caprate, vinyl laurate, vinyl palmitate, and vinyl stearate;
olefin compounds such as ethylene, propylene, isoprene, butene, 1,4-butadiene, 1,3-butadiene, pentene, 1-hexene, cyclohexyl-1-pentene, 1-dodecene, 1-tetradecene, 2-methylpentene, 2,2-dimethylpentene, and 2-methoxypropylene;
styrene compounds such as styrene, α-methylstyrene, p-methylstyrene, hexylstyrene, octylstyrene, and nonylstyrene;
vinyl chloride and vinylidene chloride, and
polydimethylsiloxane having a (meth)acryloyl group at one end or at each of both ends.

The hydrophobic group in the constituent unit derived from a hydrophobic group-containing polymerizable monomer is preferably at least one group selected from the group consisting of a linear alkyl group having from 12 to 30 carbon atoms and a divalent organopolysiloxane residue from the viewpoint of formation of a surface treatment layer excellent in antifouling properties.

In a constituent unit derived from a polymerizable monomer having a linear alkyl group having from 12 to 30 carbon atoms, the number of carbon atoms of the linear alkyl group is more preferably 14 to 28, still more preferably from 16 to 26 from the viewpoint of formation of a surface treatment layer excellent in antifouling properties.

Examples of the polymerizable monomer having a linear alkyl group having from 12 to 30 carbon atoms include dodecyl (meth)acrylate [another name: lauryl (meth)acrylate], tetradecyl (meth)acrylate [another name: myristyl (meth)acrylate], hexadecyl (meth)acrylate, octadecyl (meth)acrylate [another name: stearyl (meth)acrylate], eicosyl (meth)acrylate, and docosyl (meth)acrylate [another name: behenyl (meth)acrylate].

In a constituent unit derived from a polymerizable monomer having a divalent organopolysiloxane residue, the divalent organopolysiloxane residue is preferably a divalent organopolysiloxane residue, more preferably a group represented by Formula P1 from the viewpoint of formation of a surface treatment layer excellent in antifouling properties.

Examples of the polymerizable monomer having a divalent organopolysiloxane residue include polydimethylsiloxane having a methacryloyl group at one end (product name "X-22-174BX", manufactured by Shin-Etsu Chemical Co., Ltd., the number of repeating units is 29.1), and polydimethylsiloxane having a methacryloyl group at each of both ends (product names "Silaplane FM-7711", "Silaplane FM-7721", and "Silaplane FM-7725, manufactured by JNC Corporation).

The content of the constituent unit derived from a hydrophobic group-containing polymerizable monomer is preferably from 80 to 99% by mass, more preferably from 85 to 97% by mass with respect to the total amount of the A block.

The mass ratio of the content of the constituent unit derived from a hydrophobic group-containing polymerizable monomer with respect to the content of the constituent unit derived from a reactive group-containing polymerizable monomer in the A block is preferably from 5 to 20, more preferably from 7 to 18 from the viewpoint of formation of a surface treatment layer excellent in antifouling properties.

### <B Block>

The B block contains a divalent organopolysiloxane residue in a main chain.

The "main chain" in the disclosure indicates a chain serving as the longest skeleton in the molecule structure of the polymer.

Examples of the divalent organopolysiloxane residue include the same as in the divalent organopolysiloxane residue which can be contained in the A block. In particular, the divalent organopolysiloxane residue is preferably a group represented by Formula P1.

The B block is preferably represented by the following Formula (B1) from the viewpoint of ease of production.

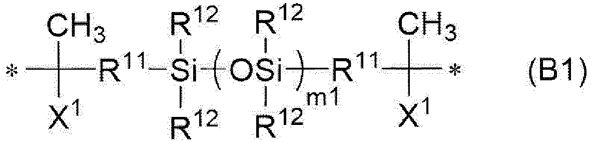

In Formula (B1), each R¹¹ independently represents a divalent linking group, each R¹² independently represents a hydrocarbon group, each X¹ independently represents an electron withdrawing group, m is an integer of 1 or more, and * means a linking site with the A block.

Examples of R¹¹ in Formula (B1) include -CH₂CH₂CONHCH₂CH₂CH₂- (wherein a propyl group is bound with Si). A preferable mode of R¹² is the same as a preferable mode of R³ in Formula P1 described above.

Examples of X¹ include a cyano group, an amidine group, an amide group, an imidazoline group, an ester group, and an acetoxy group. In particular, X¹ preferably represents a cyano group.

m is preferably from 20 to 500, more preferably from 80 to 250.

The content of the A block in the polymer of the disclosure is preferably from 30 to 90% by mass, more preferably from 40 to 85% by mass with respect to the total amount of the polymer of the disclosure. The content of the A block, here mentioned, means the total content of two such A blocks bound with the B block.

The content of the B block in the polymer of the disclosure is preferably from 10 to 70% by mass, more preferably from 15 to 60% by mass with respect to the total amount of the polymer of the disclosure.

The mass ratio of the content of the A block with respect to the content of the B block in the polymer of the disclosure is preferably from 0.4 to 9, more preferably from 0.6 to 6 from the viewpoint of formation of a surface treatment layer excellent in antifouling properties. The content of the A block, here mentioned, means the total content of two such A blocks bound with the B block.

The polymer of the disclosure can be produced by, for example, polymerization reaction by use of a polymerization initiator capable of forming the B block and a monomer solution for A block formation, including the reactive group-containing polymerizable monomer and the reactive group-free polymerizable monomer.

### [Composition]

The composition of the disclosure essentially includes the polymer of the disclosure, and may include any other component than the polymer of the disclosure.

The composition of the disclosure preferably further includes a liquid medium. In a case in which a liquid medium is included, the composition of the disclosure is essentially a liquid, and may be a solution or a dispersion liquid.

The content of the polymer of the disclosure in the composition of the disclosure is preferably from 0.01 to 60% by mass, more preferably from 0.1 to 40% by mass, still more preferably from 1 to 20% by mass with respect to the total amount of the composition of the disclosure.

Examples of the liquid medium include water and an organic solvent. **In** particular, the liquid medium is preferably an organic solvent.

**In** a case in which the liquid medium is water, a state is preferred in which the polymer of the disclosure is dispersed by a surfactant. The surfactant is preferably a fluorine atom-free surfactant. Specific examples of the surfactant include a fluorine atom-free anionic surfactant, non-ionic surfactant, cationic surfactant, or amphoteric surfactant.

Examples of the organic solvent include a compound constituted from only a hydrogen atom and a carbon atom, and a compound constituted from only a hydrogen atom, a carbon atom and an oxygen atom, and specific examples include a hydrocarbon-based organic solvent, a ketone-based organic solvent, an ether-based organic solvent, an ester-based organic solvent, a glycol-based organic solvent, and an alcohol-based organic solvent.

Specific examples of the hydrocarbon-based organic solvent include hexane, heptane, octane, cyclohexane, benzene, toluene, and xylene.

Specific examples of the ketone-based organic solvent include acetone, methyl ethyl ketone, methyl isobutyl ketone, and cyclohexanone.

Specific examples of the ether-based organic solvent include diethyl ether and tetrahydrofuran.

Specific examples of the ester-based organic solvent include ethyl acetate and butyl acetate.

Specific examples of the glycol-based organic solvent include ethylene glycol, ethylene glycol dimethyl ether, propylene glycol, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, diethylene glycol, diethylene glycol dimethyl ether, dipropylene glycol dimethyl ether pentane, dipropylene glycol, dipropylene glycol monomethyl ether, triethylene glycol dimethyl ether, tetraethylene glycol dimethyl ether, and tripropylene glycol.

Specific examples of the alcohol-based organic solvent include methanol, ethanol, 1-propanol, isopropyl alcohol, n-butanol, diacetone alcohol, and 3-methoxy-3-methyl-1-butanol.

Examples of the organic solvent include a halogen-based organic solvent, a nitrogen-containing compound, and a sulfur-containing compound.

Specific examples of the halogen-based organic solvent include dichloromethane, chloroform, carbon tetrachloride, and dichloroethane.

Specific examples of the nitrogen-containing compound include nitrobenzene, acetonitrile, benzonitrile, dimethylformamide, 3-methoxy-N,N-dimethylpropanamide, and 3-butoxy-N,N-dimethylpropanamide.

Specific examples of the sulfur-containing compound include carbon disulfide and dimethylsulfoxide.

The content of the liquid medium is preferably from 40 to 99.99% by mass, more preferably from 60 to 99.9% by mass, still more preferably from 80 to 99% by mass with respect to the total amount of the composition of the disclosure.

The composition of the disclosure may include any other component than the above components as long as the effects of the disclosure are not impaired.

Examples of such any other component include known additives for promotion of hydrolysis and condensation reaction of the reactive silyl group, such as an acid catalyst, a basic catalyst, a non-fluorine-based polymer, a crosslinking agent, a penetrating agent, a defoaming agent, a film formation aid, an insect repellent, a fungicide, a preservative agent, a flame retardant, an antistatic agent, an anticreasing agent, a softening agent, and a pH adjuster.

Examples of such any other component also include a metal compound having a hydrolyzable group (hereinafter, the metal compound having a hydrolyzable group is also designated as a "specific metal compound"). In a case in which the composition of the disclosure includes the specific metal compound, a surface treatment layer can be more enhanced in slipping properties and antifouling properties. Examples of the specific metal compound include the following Formulae (M1) to (M3).

M(X^{b1})ₘ₁(X^{b2})ₘ₂(X^{b3})ₘ₃ ... (M1)

Si(X^{b4})(X^{b5})₃ ... (M2)

(X^{b6})₃Si-(Y^{b1})-Si(X^{b7})₃ ... (M3)

In Formula (M1),
M represents a trivalent or tetravalent metal atom,
each X^{b1} independently represents a hydrolyzable group,
each X^{b2} independently represents a siloxane backbone-containing group,
each X^{b3} independently represents a hydrocarbon chain-containing group,
m1 is an integer of from 2 to 4,
each of m2 and m3 is independently an integer of from 0 to 2, and
m1 + m2 + m3 is equal to 3 in a case in which M represents a trivalent metal atom, and m1 + m2 + m3 is equal to 4 in a case in which M represents a tetravalent metal atom.

In Formula (M2),
X^{b4} represents a hydrolyzable silane oligomer residue, and
each X^{b5} independently represents a hydrolyzable group or an alkyl group having from 1 to 4 carbon atoms.

In Formula (M3),
each of X^{b6} and X^{b7} independently represents a hydrolyzable group or a hydroxyl group, and
Y^{b1} represents a divalent organic group.

In Formula (M1), the metal represented by M also encompasses semi-metals such as Si and Ge. Examples of M preferably include a trivalent metal and a tetravalent metal, more preferably Al, Fe, In, Hf, Si, Ti, Sn, and Zr, still more preferably Al, Si, Ti, and Zr, particularly preferably Si.

Examples of the hydrolyzable group represented by X^{b1} in Formula (M1) include the same as in the hydrolyzable group represented by L in [-Si(R¹)ₙL₃₋ₙ] in the reactive silyl group.

The siloxane backbone-containing group represented by X^{b2} has a siloxane unit (-Si-O-), and may be linear or branched. The siloxane unit is preferably a dialkylsilyloxy group, and examples thereof include a dimethylsilyloxy group and a diethylsilyloxy group. The number of repetitions of the siloxane unit in the siloxane backbone-containing group is 1 or more, preferably from 1 to 5, more preferably from 1 to 4, still more preferably from 1 to 3.

The siloxane backbone-containing group may contain a divalent hydrocarbon group in one portion of the siloxane backbone. Specifically, an oxygen atom in one portion of the siloxane backbone may be replaced with a divalent hydrocarbon group. Examples of the divalent hydrocarbon group include alkylene groups such as a methylene group, an ethylene group, a propylene group, and a butylene group.

A hydrolyzable group, a hydrocarbon group (preferably an alkyl group), or the like may be bound to a silicon atom at an end of the siloxane backbone-containing group.

The number of elements in the siloxane backbone-containing group is preferably 100 or less, more preferably 50 or less, still mor preferably 30 or less. The number of elements is preferably 10 or more.

The siloxane backbone-containing group is preferably a group represented by *-(O-Si(CH₃)₂)ₙCH₃, in which n is an integer of from 1 to 5 and * represents a binding site with an adjacent atom.

The hydrocarbon chain-containing group represented by X^{b3} may be a group constituted from only a hydrocarbon chain, or may be a group having an ethereal oxygen atom between a carbon atom and a carbon atom in the hydrocarbon chain. The hydrocarbon chain may be linear or branched, and is preferably linear. The hydrocarbon chain may be a saturated hydrocarbon chain or an unsaturated hydrocarbon chain, and is preferably a saturated hydrocarbon chain. The number of carbon atoms of the hydrocarbon chain-containing group is preferably from 1 to 3, more preferably from 1 to 2, still more preferably 1. The hydrocarbon chain-containing group is preferably an alkyl group, more preferably a methyl group, an ethyl group, or a propyl group.

m1 is preferably 3 or 4.

The compound represented by Formula (M1) is preferably a compound represented by the following Formulae (M1-1) to (M1-5) in which M represents Si, more preferably a compound represented by Formula (M1-1). The compound represented by Formula (M1-1) is preferably tetraethoxysilane, tetramethoxysilane, or triethoxymethylsilane.

Si(X^{b1})₄ ... (M1-1)

CH₃-Si(X^{b1})₃ ... (M1-2)

C₂H₅-Si(X^{b1})₃ ... (M1-3)

n-C₃H₇-Si(X^{b1})₃ ... (M1-4)

(CH₃)₂CH-Si(X^{b1})₃ ... (M1-5)

The number of silicon atoms contained in the hydrolyzable silane oligomer residue represented by X^{b4} in Formula (M2) is preferably 3 or more, more preferably 5 or more, still more preferably 7 or more. The number of silicon atoms is preferably 15 or less, more preferably 13 or less, still more preferably 10 or less.

The hydrolyzable silane oligomer residue may have an alkoxy group bound to a silicon atom. Examples of the alkoxy group include a methoxy group, an ethoxy group, a propoxy group, and a butoxy group, and a methoxy group and an ethoxy group are preferred. The hydrolyzable silane oligomer residue may have one, or two or more such alkoxy groups, and preferably has one such alkoxy group.

Examples of the hydrolyzable silane oligomer residue include (C₂H₅O)₃Si-(OSi(OC₂H₅)₂)₄O-*. Here, * represents a binding site with an adjacent atom.

Examples of the hydrolyzable group represented by X^{b5} in Formula (M2) include the same as in the hydrolyzable group represented by L in [-Si(R¹)ₙL₃₋ₙ] in the reactive silyl group, a cyano group, a hydrogen atom, and an allyl group, and an alkoxy group or an isocyanato group is preferred. The alkoxy group is preferably an alkoxy group having from 1 to 4 carbon atoms.

X^{b5} preferably represents a hydrolyzable group.

Examples of the compound represented by Formula (M2) include (H₅C₂O)₃-Si-(OSi(OC₂H₅)₂)₄OC₂H₅.

The compound represented by Formula (M3) is a compound having a reactive silyl group at each of both ends of a divalent organic group, namely, bissilane.

Examples of the hydrolyzable group represented by each of X^{b6} and X^{b7} in Formula (M3) include an alkoxy group, an acyloxy group, a ketoxime group, an alkenyloxy group, an amino group, an aminoxy group, an amide group, an isocyanato group, and a halogen atom, and an alkoxy group and an isocyanato group are preferred. The alkoxy group is preferably an alkoxy group having from 1 to 4 carbon atoms, more preferably a methoxy group or an ethoxy group.

X^{b6} and X^{b7} in Formula (M3) may be the same groups as each other or may be different groups from each other. X^{b6} and X^{b7} are preferably the same groups as each other in terms of availability.

Y^{b1} in Formula (M3) is a divalent organic group for linkage of reactive silyl groups at both ends. The number of carbon atoms of Y^{b1} in the divalent organic group is preferably from 1 to 8, more preferably from 1 to 3.

Examples of Y^{b1} include an alkylene group, a phenylene group, and an alkylene group having an ethereal oxygen atom between carbon atoms. Examples include -CH₂CH₂-, - CH₂CH₂CH₂-, -CH₂CH₂CH₂CH₂-, -CH₂CH₂CH₂CH₂CH₂-, -CH₂CH₂CH₂CH₂CH₂CH₂-, - CH₂C(CH₃)₂CH₂-, -C(CH₃)₂CH₂CH₂C(CH₃)₂-, -CH₂CH₂OCH₂CH₂-, - CH₂CH₂CH₂OCH₂CH₂CH₂-, -CH(CH₃)CH₂OCH₂CH(CH₃)-, and -C₆H₄-.

Examples of the compound represented by Formula (M3) include (CH₃O)₃Si(CH₂)₂Si(OCH₃)₃, (C₂H₅O)₃Si(CH₂)₂Si(OC₂H₅)₃, (OCN)₃Si(CH₂)₂Si(NCO)₃, Cl₃Si(CH₂)₂SiCl₃, (CH₃O)₃Si(CH₂)₆Si(OCH₃)₃, and (C₂H₅O)₃Si(CH₂)₆Si(OC₂H₅)₃.

The content of any other component optionally included in the composition of the disclosure is preferably 10% by mass or less, more preferably 1% by mass or less with respect to the total amount of the composition of the disclosure. In a case in which the composition of the disclosure includes the specific metal compound, the content of the specific metal compound is preferably from 0.001 to 10% by mass, more preferably from 0.01 to 5% by mass, still more preferably from 0.03 to 1% by mass with respect to the total amount of the composition of the disclosure.

The solid content concentration of the composition of the disclosure is preferably from 0.01 to 60% by mass, more preferably from 0.1 to 40% by mass, still more preferably from 1 to 20% by mass with respect to the total amount of the composition of the disclosure. The solid content concentration of the composition of the disclosure is a value calculated from the mass of the composition before heating and the mass thereof after heating by a convection drier at 120°C for 4 hours.

The composition of the disclosure includes the liquid medium, therefore is useful in a coating application and can be used as a coating liquid.

### [Surface Treatment Agent]

In one aspect, the surface treatment agent of the disclosure includes the polymer of the disclosure.

The surface treatment agent of the disclosure may include the polymer of the disclosure and a liquid medium. A preferable mode of the liquid medium included in the surface treatment agent is the same as a preferable mode of the liquid medium included in the composition of the disclosure.

The surface treatment agent including the polymer of the disclosure is used, whereby a surface treatment layer excellent in antifouling properties can be formed.

### [Article]

In one aspect, the article of the disclosure includes a substrate, and a surface treatment layer disposed on the substrate and surface-treated with the surface treatment agent.

The surface treatment layer may be formed on one portion of a surface of the substrate, or may be formed on the entire surface of the substrate. The surface treatment layer may be spread as a film or in a dotted manner on a surface of the substrate.

The surface treatment layer includes the polymer of the disclosure in a state in which hydrolysis of some or all of reactive silyl groups progresses and dehydration-condensation reaction of a silanol group progresses.

The thickness of the surface treatment layer is preferably from 1 to 100 nm, more preferably from 1 to 50 nm. A thickness of the surface treatment layer of 1 nm or more allows the effect by the surface treatment to be sufficiently easily achieved. A thickness of the surface treatment layer of 100 nm or less allows for a high usage efficiency. The thickness of the surface treatment layer can be calculated from the oscillation period of an interference pattern of X-ray reflected, in which the pattern is obtained with an X-ray diffractometer for thin film analysis (product name "ATX-G", manufactured by Rigaku Corporation), according to an X-ray reflectivity method. The thickness of the surface treatment layer can also be calculated by observation with a transmission-type electron microscope or the like.

The type of the substrate is not particularly limited, and examples thereof include a substrate to which water repellency is demanded to be imparted. Examples of the substrate include a substrate to be sometimes used with being in contact with any other article (for example, stylus) or the human fingers; a substrate to be sometimes held by the human fingers during operation; and a substrate to be sometimes disposed on any other article (for example, installation stand).

Examples of the material of the substrate include a metal, a resin, glass, sapphire, ceramic, stone, a fiber, a fabric cloth, a non-woven fabric, paper, wood, natural leather, artificial leather, and any composite material thereof. Such glass may be chemically strengthened.

Examples of the substrate include glass or resins to be used for building materials, decorative building materials, interior articles, transport equipment (for example, automobiles), signboards/notice boards, beverage containers/dishes, water tanks, ornamental instruments (for example, frames and boxes), experimental instruments, furniture, fiber products, and packaging containers; glass or resins to be used for art, sports, and games; and glass or resins to be used for exterior members (excluding display sections) in equipment such as portable phones (for example, smartphones), portable information terminals, game machines, and remote controllers. The shape of the substrate may be a sheet, plate, or film shape. The organized structure of the substrate may be solid or porous.

The substrate is suitably a substrate for touch panels, a substrate for displays, a lens for eyeglasses, a substrate for protective clothing, such as a medical gown, or a substrate for filters for dust-proofing or antifouling, particularly suitably a substrate for touch panels, a substrate for protective clothing, such as a medical gown, or a substrate for filters for dust-proofing or antifouling. The material for the substrate for touch panels is preferably glass or a transparent resin. The substrate for protective clothing, such as a medical gown, is preferably a non-woven fabric, and the material therefor is preferably polypropylene. The substrate for filters for dust-proofing or antifouling is preferably a non-woven fabric, and the material therefor is preferably glass, polyolefin (polypropylene, polyethylene, or the like), polyvinyl chloride, nylon, polyester, or polystyrene.

The substrate may be a substrate in which one surface or both surfaces is/are subjected to surface treatment such as corona discharge treatment, plasma treatment, or plasma graft polymerization treatment. Such a substrate subjected to surface treatment is more excellent in adhesiveness with a surface treatment layer, and a surface treatment layer is more enhanced in wear resistance. Therefore, a surface of the substrate, the surface being contacted with a surface treatment layer, is preferably subjected to surface treatment. **In** a case in which an underlayer described below is provided, such a substrate subjected to surface treatment is more excellent in adhesiveness with the underlayer and a surface treatment layer is more enhanced in wear resistance. Therefore, in a case in which the underlayer is provided, a surface of the substrate, the surface being contacted with the underlayer, is preferably subjected to surface treatment.

The surface treatment layer may be directly provided on a surface of the substrate, or the underlayer may be provided between the substrate and the surface treatment layer. The article of the disclosure preferably includes the substrate, an underlayer disposed on the substrate, and a surface treatment layer disposed on the underlayer and subjected to surface treatment with the surface treatment agent of the disclosure from the viewpoint of more enhancements in water repellency and wear resistance of the surface treatment layer.

The underlayer is preferably a layer including oxide containing silicon and at least one specific element selected from the group consisting of Group 1 elements, Group 2 elements, Group 4 elements, Group 5 elements, Group 13 elements, and Group 15 elements in the periodic table.

The Group 1 elements in the periodic table (hereinafter, also referred to as "Group 1 Element".) mean lithium, sodium, potassium, rubidium, and cesium. The Group 1 Element is preferably lithium, sodium, or potassium, more preferably sodium or potassium, from the viewpoint that a water-repellent and oil-repellent layer can be more uniformly formed on the underlayer without any defects, or from the viewpoint that the variation in composition profile of the underlayer between samples is more suppressed. The underlayer may contain two or more kinds of such Group 1 Elements.

The Group 2 elements in the periodic table (hereinafter, also referred to as "Group 2 Element".) mean beryllium, magnesium, calcium, strontium, and barium. The Group 2 Element is preferably magnesium, calcium, or barium, more preferably magnesium or calcium from the viewpoint that a water-repellent and oil-repellent layer can be more uniformly formed on the underlayer without any defects, or from the viewpoint that the variation in composition profile of the underlayer between samples is more suppressed. The underlayer may contain two or more kinds of such Group 2 Elements.

The Group 4 elements in the periodic table (hereinafter, also referred to as "Group 4 Element".) mean titanium, zirconium, and hafnium. The Group 4 Element is preferably titanium or zirconium, more preferably titanium from the viewpoint that a water-repellent and oil-repellent layer can be more uniformly formed on the underlayer without any defects, or from the viewpoint that the variation in composition profile of the underlayer between samples is more suppressed. The underlayer may contain two or more kinds of such Group 4 Elements.

The Group 5 elements in the periodic table (hereinafter, also referred to as "Group 5 Element".) mean vanadium, niobium, and tantalum. The Group 5 element is particularly preferably vanadium from the viewpoint that wear resistance of a water-repellent and oil-repellent layer is more excellent. The underlayer may contain two or more kinds of such Group 5 Elements.

The Group 13 elements in the periodic table (hereinafter, also referred to as "Group 13 Element".) mean boron, aluminum, gallium, and indium. The Group 13 Element is preferably boron, aluminum, or gallium, more preferably boron or aluminum from the viewpoint that a water-repellent and oil-repellent layer can be more uniformly formed on the underlayer without any defects, or from the viewpoint that the variation in composition profile of the underlayer between samples is more suppressed. The underlayer may contain two or more kinds of such Group 13 Elements.

The Group 15 elements in the periodic table (hereinafter, also referred to as "Group 15 Element".) mean nitrogen, phosphorus, arsenic, antimony, and bismuth. The Group 15 Element is preferably phosphorus, antimony, or bismuth, more preferably phosphorus or bismuth from the viewpoint that a water-repellent and oil-repellent layer can be more uniformly formed on the underlayer without any defects, or from the viewpoint that the variation in composition profile of the underlayer between samples is more suppressed. The underlayer may contain two or more kinds of such Group 15 Elements.

The specific element contained in the underlayer is preferably the Group 1 Element, the Group 2 Element, or the Group 13 Element, more preferably the Group 1 Element or the Group 2 Element, still more preferably the Group 1 Element because wear resistance of a water-repellent and oil-repellent layer is more excellent.

Only one element, or two or more elements may be included in the specific element.

The oxide contained in the underlayer may be a mixture of a single oxide of the element (silicon and the specific element) (for example, a mixture of silicon oxide and oxide of the specific element), may be a composite oxide including two or more kinds of the elements, or may be a mixture of a single oxide of the element and a composite oxide.

The ratio (specific element/silicon) of the total molar concentration of the specific element in the underlayer with respect to the molar concentration of silicon in the underlayer is preferably from 0.02 to 2.90, more preferably from 0.10 to 2.00, still more preferably from 0.20 to 1.80 from the viewpoint that wear resistance of a water-repellent and oil-repellent layer is more excellent.

The molar concentration (% by mol) of each element in the underlayer can be measured by, for example, depth profile analysis according to X-ray photoelectron spectroscopy (XPS) with ion sputtering.

The underlayer may be a single layer or multiple layers. The underlayer may have asperities on a surface thereof.

The thickness of the underlayer is preferably from 1 to 100 nm, more preferably from 1 to 50 nm, still more preferably from 2 to 20 nm. In a case in which the thickness of the underlayer is equal to or more than the lower limit value, adhesiveness of the surface treatment layer with the underlayer is more enhanced and wear resistance of the surface treatment layer is more excellent. In a case in which the thickness of the underlayer is equal to or less than the upper limit value, wear resistance of the underlayer by itself is excellent.

The thickness of the underlayer is measured by observation of a cross section of the underlayer with a transmission electron microscope (TEM).

The underlayer can be formed by, for example, a vapor deposition method with a vapor deposition material, or a wet coating method.

The vapor deposition material used in the vapor deposition method preferably contains oxide containing silicon and the specific element.

Specific examples of the form of the vapor deposition material include a powder, a molten body, a sintered body, a granulated body, and a ground body, and a molten body, a sintered body, or a granulated body is preferred from the viewpoint of handleability.

The molten body here means a solid material obtained by melting a powder of the vapor deposition material at a high temperature and then cooling and solidifying the molten product. The sintered body means a solid material obtained by firing a powder of the vapor deposition material, and a molded body obtained by pressing the powder may be, if necessary, used instead of the powder of the vapor deposition material. The granulated body means a solid material obtained by kneading a powder of the vapor deposition material and a liquid medium (for example, water or an organic solvent), to provide a particle, and then drying the particle.

The vapor deposition material can be produced by, for example, any method described below.
· A method of obtaining a powder of the vapor deposition material by mixing a powder of silicon oxide and a powder of oxide of the specific element.
· A method of obtaining a granulated body of the vapor deposition material by kneading the powder of the vapor deposition material and water, to provide a particle, and then drying the particle.
· A method of obtaining a sintered body by drying a mixture obtained by mixing of a powder containing silicon (for example, a powder made of silicon oxide, silica sand, or silica gel), a powder containing the specific element (for example, an oxide powder, carbonate, sulfate, nitrate, oxalate, or hydroxide of the specific element), and water, and then firing the mixture dried or a molded body obtained by pressing of the mixture.
· A method of obtaining a molten body by melting a powder containing silicon (for example, a powder made of silicon oxide, silica sand, or silica gel) and a powder containing the specific element (for example, an oxide powder, carbonate, sulfate, nitrate, oxalate, or hydroxide of the specific element) at a high temperature and then cooling and solidifying the molten product.

Specific examples of the vapor deposition method with the vapor deposition material include a vacuum vapor deposition method. The vacuum vapor deposition method is a method including evaporating the vapor deposition material in a vacuum tank, to attach the vapor deposition material to a substrate surface.

The temperature in vapor deposition (for example, the temperature of a boat for placement of the vapor deposition material, in the case of use of a vacuum vapor deposition apparatus) is preferably from 100 to 3,000°C, more preferably from 500 to 3,000°C.

The pressure in vapor deposition (for example, the pressure in a tank for placement of the vapor deposition material, in the case of use of a vacuum vapor deposition apparatus) is preferably 1 Pa or less, more preferably 0.1 Pa or less.

In a case in which the underlayer is formed with the vapor deposition material, the vapor deposition material may be used singly or may be used in the form of two or more such vapor deposition materials different in element contained therein.

Specific examples of the method of evaporating the vapor deposition material include a resistance heating method including melting and evaporating the vapor deposition material on a resistance heating boat made of a high-melting-point metal, and an electron gun method including evaporating the vapor deposition material by irradiation of the vapor deposition material with an electron beam and direct heating of the vapor deposition material and thus melting of a surface. The method of evaporating the vapor deposition material is preferably the electron gun method from the viewpoint that the method can provide local heating, thereby allowing for evaporation of a high-melting-point substance, and from the viewpoint that an area not irradiated with an electron beam is at a low temperature, thereby causing no risk of reaction with any container and contamination of impurities.

The method of evaporating the vapor deposition material may be conducted with a plurality of boats, or a single boat in which all of the vapor deposition material is placed. The vapor deposition method may be co-vapor deposition, or may be alternating vapor deposition or the like. Specific examples include an example of use in which silica and a specific source are mixed in the same boat, an example of co-vapor deposition in separate boats in which silica and a specific element source are respectively placed, and an example of alternating vapor deposition in separate boats in the same manner. Conditions, order, and the like of such vapor deposition are, if appropriate, selected depending on the configuration of the underlayer.

In the case of the wet coating method, the underlayer is preferably formed on the substrate by a wet coating method with a coating liquid including a compound containing silicon, a compound containing the specific element, and a liquid medium.

Specific examples of such a silicon compound include silicon oxide, silicic acid, a partial condensate of silicic acid, alkoxysilane, and a partial hydrolysis condensate of alkoxysilane.

Specific examples of the compound containing the specific element include oxide of the specific element, alkoxide of the specific element, carbonate of the specific element, sulfate of the specific element, nitrate of the specific element, oxalate of the specific element, and hydroxide of the specific element.

Examples of the liquid medium include the same as in the liquid medium included in the composition of the disclosure.

The content of the liquid medium is preferably from 0.01 to 20% by mass, more preferably from 0.1 to 10% by mass with respect to the total amount of the coating liquid used for formation of the underlayer.

Specific examples of the wet coating method for formation of the underlayer include a spin coating method, a wipe coating method, a spray coating method, a squeegee coating method, a dip coating method, a die coating method, an ink-jet method, a flow coating method, a roll coating method, a casting method, a Langmuir-Blodgett method, and a gravure coating method.

After wet coating with the coating liquid, a coating film is preferably dried. The drying temperature of the coating film is preferably from 20 to 200°C, more preferably from 80 to 160°C.

The article of the disclosure may be an optical member, protective clothing, such as medical gown, or a filter for dust-proofing or antifouling, to be used for a semiconductor manufacturing apparatus or the like, and is preferably an optical member. Examples of the optical member include car navigation, a portable phone, a smartphone, a digital camera, a digital video camera, PDA, a portable audio player, car audio, a game instrument, a lens for eyeglasses, a camera lens, a lens filter, sunglasses, a medical instrument such as a gastric camera, a copier, PC, displays (for example, a liquid crystal display, an organic EL display, a plasma display, and a touch panel display), a touch panel, a protection film, and an antireflection film. In particular, the article is preferably a display or a touch panel.

### [Method of Producing Article]

The method of producing an article of the disclosure is, for example, a method of producing an article in which a surface treatment layer is formed on a substrate, including performing surface treatment of the substrate with the surface treatment agent of the disclosure. Examples of the surface treatment include a wet coating method. In a case in which the molecular weight of the polymer of the disclosure is small, a dry coating method is also exemplified.

Examples of the dry coating method include procedures such as vacuum vapor deposition, CVD, and sputtering. The dry coating method is preferably a vacuum vapor deposition method from the viewpoint of suppression of compound decomposition and from the viewpoint of simplicity of an apparatus. A pellet-like substance in which a metal porous body such as iron or steel is impregnated with the compound of the disclosure may be used in vacuum vapor deposition. A pellet-like substance impregnated with the compound of the disclosure by impregnation of a metal porous body such as iron or steel with a composition including the compound of the disclosure and a liquid medium and drying of the liquid medium may also be used.

Examples of the wet coating method include a spin coating method, a wipe coating method, a spray coating method, a squeegee coating method, a dip coating method, a die coating method, an ink-jet method, a flow coating method, a roll coating method, a casting method, a Langmuir-Blodgett method, and a gravure coating method.

An operation for promotion of reaction of the polymer of the disclosure and the substrate may be, if necessary, performed in order to enhance antifouling properties of the surface treatment layer. Examples of the operation include heating, humidification, and light irradiation.

For example, the substrate on which the surface treatment layer is formed can be heated in air containing moisture, thereby allowing for promotion of reaction such as hydrolysis reaction of a hydrolyzable group, reaction between a hydroxyl group or the like on a substrate surface and a silanol group, or generation of a siloxane bond by condensation reaction of a silanol group.

After the surface treatment, a compound which is a compound in the surface treatment layer and which is not chemically bound with any other compound or substrate may be, if necessary, removed. Examples of the removal method include a method including pouring a solvent onto the surface treatment layer and a method including wiping off such a compound by a fabric permeated with a solvent.

### Examples

Hereinafter, the invention is described in further detail with reference to Examples, but the invention is not limited to these Examples.

### <Polymerizable Monomers for A Block>

Polymerizable monomers for formation of the A block are shown below.

### - Reactive group-containing polymerizable monomer (in Table 1 and Table 2, "Reactive group-containing monomer") -

· 3-Methacryloxypropyltrimethoxysilane (product name "KBM-503", manufactured by Shin-Etsu Chemical Co., Ltd.)
· 3,5-Dimethylpyrazole adduct of 2-isocyanatoethyl methacrylate (product name "Karenz MOI-BP", manufactured by Showa Denko K.K.)

### - Hydrophobic group-containing polymerizable monomer (in Table 1 and Table 2, "hydrophobic group-containing monomer") -

· StA: stearyl acrylate (manufactured by Tokyo Chemical Industry Co., Ltd.)
· BeA: behenyl acrylate (manufactured by Tokyo Chemical Industry Co., Ltd.)
· Polydimethylsiloxane containing methacryloyl group at one end (product name "X-22-174BX", manufactured by Shin-Etsu Chemical Co., Ltd., the number of repeating units is 29.1)

### <Polymerization Initiator for B Block>

A polymerization initiator for formation of the B block is shown below.
· Polymerization initiator having dimethylpolysiloxane residue in main chain (product name "VPS-1001N", manufactured by FUJIFILM Wako Pure Chemical Corporation, molecular weight of silicone unit: about 10,000)

### [Example 1]

A 500-mL three-necked flask was loaded with 119 g of 1-methoxy-2-propanol and 21 g of diacetone alcohol as polymerization solvents, 45 g of StA and 3 g of KBM-503 as polymerizable monomers for the A block, and 12 g of VPS-1001N as a polymerization initiator for the B block.

The resulting mixture was mixed at 80°C under a nitrogen atmosphere for 16 hours, and a solution containing an ABA triblock polymer was then obtained. The yield was 200 g and the solid content concentration was 30% by mass. The conversion was 100% as analyzed with GPC. The ABA triblock polymer was configured from the A block being a random polymer containing a constituent unit derived from StA and a constituent unit derived from KBM-503, and the B block containing a dimethylpolysiloxane residue in a main chain.

### [Examples 2 to 16]

In Examples 2 to 16, each solution containing an ABA triblock polymer was obtained by the same method as in Example 1 except that the types and contents of the polymerizable monomers for the A block and the polymerization initiator for the B block were modified to those described in Table 1 and Table 2. In each of Examples 10 to 14, azobisisobutyronitrile (AIBN) was used as other polymerization initiator.

Each of the solutions obtained in Examples 1 to 14 was diluted with 1-methoxy-2-propanol so that the concentration of the ABA triblock polymer was 1% by mass, whereby a surface treatment agent was obtained. In each of Examples 1 to 3 and 7 to 14, a glass base plate was subjected to surface treatment with the surface treatment agent by a spray coating method, and left to still stand at 25°C for 15 minutes and then heated at 120°C for 1 hour. An article was thus obtained which had a surface treatment layer on a surface of the glass base plate. In each of Examples 4 to 6, an article having a surface treatment layer on a surface of cotton (cotton fabric cloth) was obtained by the same method as in Example 1 except that such cotton (cotton fabric cloth) was used as a treatment substrate instead of the glass base plate. In Example 15, an article having a surface treatment layer on a surface of a polypropylene (PP) non-woven fabric (basis weight: 63 g/m²) was obtained by the same method as in Example 4 except that such a polypropylene (PP) non-woven fabric was used as a treatment substrate instead of the cotton (cotton fabric cloth). In Example 16, an article having a surface treatment layer on a surface of a glass fiber non-woven fabric was obtained by the same method as in Example 4 except that such a glass fiber non-woven fabric was used as a treatment substrate instead of the cotton (cotton fabric cloth).

In Table 1, each of numerical values with respect to the polymerizable monomers for the A block and the polymerization initiator for the B block represents a content on a mass basis. In addition, "-" indicates no inclusion of any relevant component.

The articles obtained were each evaluated with respect to fouling wiping properties. The evaluation method is as follows.

### <Fouling Wiping Properties>

One mL of coffee at 25°C was dropped onto the article, and covered with a wrapping film (product name "Saranwrap (registered trademark)", manufactured by Asahi Kasei Corporation), a 1-kg weight was mounted thereon, and the resultant was left to still stand for 10 minutes. After 10 minutes, the weight and the wrapping film were removed, and a section on which the coffee was dropped was wiped off three times with a paper wiper (product name "KIMTOWEL (registered trademark)", manufactured by NIPPON PAPER CRECIA CO., LTD.). After wiping, the degree of the remaining coffee on the article was visually observed. Fouling wiping properties were evaluated based on the degree of the remaining coffee. The evaluation criteria are as follows.
AA: no coffee remains.
A: coffee partially remains.
B: some of coffee is removed, but most of coffee remains and is spread on article surface.
C: almost no coffee is removed.

The evaluation results are shown in Table 1 and Table 2.

Examples 1 to 9, 15 and 16 correspond to Experimental Examples and Examples 10 to 14 correspond to Comparative Examples.

**[Table 1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| A block | Hydrophobic group-containing monomer | StA | 75 | - | - | 75 | - | - | 50 | - | - |
| | | BeA | - | 75 | - | - | 75 | - | - | 50 | - |
| | | X-22-174BX | - | - | 75 | - | - | 75 | - | - | 50 |
| | Reactive group-containing monomer | KBM-503 | 5 | 5 | 5 | - | - | - | 5 | 5 | 5 |
| | | MOI-BP | - | - | - | 5 | 5 | 5 | - | - | - |
| B block | | VPS-1001N | 20 | 20 | 20 | 20 | 20 | 20 | 45 | 45 | 45 |
| Treatment substrate | | | Glass | Glass | Glass | Cotton | Cotton | Cotton | Glass | Glass | Glass |
| Fouling wiping properties | | | AA | AA | A | A | A | A | AA | AA | A |

**[Table 2]**

| | | | Example 10 | Example 11 | Example 12 | Example 13 | Example 14 | Example 15 | Example 16 |
|---|---|---|---|---|---|---|---|---|---|
| A block | Hydrophobic group-containing monomer | StA | 74 | - | - | 49 | - | 75 | 75 |
| | | BeA | - | 74 | - | - | 49 | - | - |
| | | X-22-174BX | 20 | 20 | 94 | 45 | 45 | - | - |
| | Reactive group-containing monomer | KBM-503 | 5 | 5 | 5 | 5 | 5 | - | - |
| | | MOI-BP | - | - | - | - | - | 5 | 5 |
| B block | | VPS-1001N | - | - | - | - | - | 20 | 20 |
| Another polymerization initiator | | AIBN | 1 | 1 | 1 | 1 | 1 | - | - |
| Treatment substrate | | | Glass | Glass | Glass | Glass | Glass | PP non-woven fabric | Glass fiber |
| Fouling wiping properties | | | B | B | C | B | B | A | A |

As shown in Table 1, in each of Examples 1 to 9, and 15 and 16, the A block was a random polymer including a constituent unit derived from a reactive group-containing polymerizable monomer and a constituent unit derived from a hydrophobic group-containing polymerizable monomer and the B block contained a divalent organopolysiloxane residue in a main chain, whereby a surface treatment layer excellent in antifouling properties could be formed.

In this regard, it was found as shown in Table 2 that, in each of Examples 10 to 14, no B block containing a divalent organopolysiloxane residue in a main chain was contained, whereby antifouling properties of a surface treatment layer were inferior.

### Industrial Applicability

The ABA triblock polymer of the disclosure is useful as a surface treatment agent. The surface treatment agent can be used in, for example, a substrate in a display apparatus such as a touch panel display, an optical device, a semiconductor device, a building material, an automobile part, a nanoimprint technology, or the like. The surface treatment agent can also be used in a body, window glass (windshield, side glass, rear glass), a mirror, a bumper, or the like in transport equipment such as a train, an automobile, a marine vessel, or an aircraft. The surface treatment agent can be used furthermore in an outdoor article such as a building outer wall, a tent, a solar cell power generation module, a sound insulating board, or concrete; or a fishing net, a debugging net, or a water tank. The surface treatment agent can also be used in any member around a kitchen, a bathroom, a washstand, a mirror, or a toilet; a chandelier, or pottery such as a tile; or any indoor installation such as an artificial marble or an air conditioner. The surface treatment agent can also be used for antifouling treatment of a tool, an inner wall, a pipe, or the like in a plant. The surface treatment agent can also be used in googles, eyeglasses, a helmet, pachinko, a fiber, a fabric cloth, a non-woven fabric, clothing, protective clothing, a filter, a bag, an umbrella, play equipment, or a soccer ball. The surface treatment agent can also be used as an anti-adhesive agent for various packaging materials such as a packaging material for foods, a packaging material for cosmetics, and an interior portion for pots. The surface treatment agent can also be used in an optical member such as car navigation, a portable phone, a smartphone, a digital camera, a digital video camera, PDA, a portable audio player, car audio, a game instrument, a lens for eyeglasses, a camera lens, a lens filter, sunglasses, a medical instrument such as a gastric camera, a copier, PC, a display (for example, a liquid crystal display, an organic EL display, a plasma display, or a touch panel display), a touch panel, a protection film, or an antireflection film.

The disclosure of Japanese Patent Application No. 2022-057656 filed on March 30, 2022 is herein incorporated by reference in its entirety. All documents, patent applications, and technical standards described herein are herein incorporated by reference, as if each individual document, patent application, and technical standard were specifically and individually described to be incorporated by reference.

## Claims

1. An ABA triblock polymer, comprising an A block and a B block, wherein:
the A block is a random polymer including a constituent unit derived from a reactive group-containing polymerizable monomer and a constituent unit derived from a hydrophobic group-containing polymerizable monomer, and
the B block contains a divalent organopolysiloxane residue in a main chain.

2. The ABA triblock polymer according to claim 1, wherein the hydrophobic group is at least one group selected from the group consisting of a linear alkyl group having from 12 to 30 carbon atoms and a divalent organopolysiloxane residue.

3. The ABA triblock polymer according to claim 1 or claim 2, wherein the reactive group is at least one selected from a reactive silyl group, an isocyanato group, a phosphoric acid ester group, a carboxy group, a carbodiimide group, an oxazoline group, and an epoxy group.

4. The ABA triblock polymer according to any one of claims 1 to 3, wherein the reactive group is a reactive silyl group.

5. The ABA triblock polymer according to any one of claims 1 to 4, wherein the B block has a structure represented by the following Formula (B1): 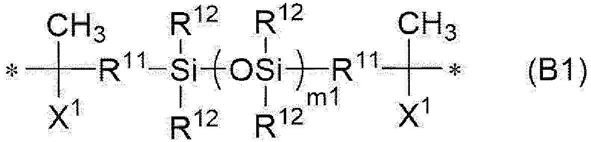 wherein, in Formula B1, each R¹¹ independently represents a divalent linking group, each R¹² independently represents a hydrocarbon group, each X¹ independently represents an electron withdrawing group, m is an integer of 1 or more, and * represents a linking site with the A block.

6. The ABA triblock polymer according to any one of claims 1 to 5, wherein a mass ratio of a content of the A block with respect to a content of the B block is from 0.4 to 9.

7. The ABA triblock polymer according to any one of claims 1 to 6, wherein a mass ratio of a content of the constituent unit derived from a hydrophobic group-containing polymerizable monomer with respect to a content of the constituent unit derived from a reactive group-containing polymerizable monomer in the A block is from 5 to 20.

8. A composition, comprising the ABA triblock polymer according to any one of claims 1 to 7, and a liquid medium.

9. A surface treatment agent, comprising the ABA triblock polymer according to any one of claims 1 to 7.

10. The surface treatment agent according to claim 9, further comprising a liquid medium.

11. A method of producing an article, the method comprising performing surface treatment on a substrate using the surface treatment agent according to claim 9 or 10, to produce an article comprising a surface treatment layer formed on the substrate.

12. An article, comprising: a substrate; and a surface treatment layer disposed on the substrate and surface-treated with the surface treatment agent according to claim 9 or 10.

13. The article according to claim 12, wherein the article is an optical member.

14. The article according to claim 12, wherein the article is a display or a touch panel.

15. The article according to claim 12, wherein the substrate comprises a fabric cloth or a non-woven fabric.
